# EUROPEAN PATENT APPLICATION

(11) **EP 4 546 384 A1**
(43) Date of publication of application: **30.04.2025**
(21) Application number: 23863255.8
(22) Date of filing: 07.09.2023
(51) Int. Cl.: H01G 11/06, H01G 11/50, H01G 11/82, H01G 11/86

(54) **METHOD FOR MANUFACTURING LITHIUM-ION CAPACITOR**

(30) Priority: 08.09.2022 JP 2022143169
(71) Applicant: Komatsu Ltd., Minato-ku Tokyo 107-8414 (JP); Asahi Kasei Kabushiki Kaisha, Tokyo 1000006 (JP)
(72) Inventor: NOTO, Kenichi, Tokyo 107-8414 (JP); KASAMA, Ryota, Tokyo 107-8414 (JP); KIMURA, Yuima, Tokyo 100-0006 (JP); NAKAMURA, Fumiya, Tokyo 100-0006 (JP)
(74) Representative: Global IP Europe Patentanwaltskanzlei
(86) International application number: PCT/JP2023/032750
(87) International publication number: WO 2024/053717

(57) **Abstract**

The manufacturing method of the lithium-ion capacitor (1) includes a step (S11) of performing doping at a first doping current value and a step (S12) of performing doping at a second doping current value. In the step (S11) of performing doping at the first doping current value, doping is performed at the first doping current value of 0.05 C or more and 0.2 C or less from the start of the doping. In the step (S12) of performing doping at the second doping current value, doping is performed at a second doping current value having a C rate higher than the first current value.

## Description

### TECHNICAL FIELD

The present invention relates to a method for manufacturing a lithium-ion capacitor.

Priority is claimed on Japanese Patent Application No. 2022-143169, filed September 8, 2022, the content of which is incorporated herein by reference.

### BACKGROUND ART

Patent Document 1 discloses a configuration of a lithium ion-based electrochemical device including an electrode group formed by winding a positive electrode and a negative electrode with a separator interposed therebetween, a case accommodating the electrode group, and an organic electrolytic solution which permeates or is impregnated in the electrode group within the case.

### Citation List

### Patent Document

Patent Document 1: Japanese Unexamined Patent Application, First Publication No. 2014-116237

### SUMMARY OF INVENTION

### Technical Problem

In a case where the configuration disclosed in Patent Document 1 is applied to, for example, a lithium-ion capacitor, a deactivation rate of lithium may increase in a case where a durability test or the like of a product is performed. In order to improve the durability of the product, it is preferable to suppress the deactivation rate of lithium. Therefore, as a result of intensive studies conducted by the present inventors, it has been found that, in a case where a lithium-ion capacitor is subjected to doping, the film thickness of a film (solid electrolyte interphase (SEI) film) formed on a surface of a negative electrode is uneven, which may adversely affect the deactivation rate of lithium.

The present invention has been made in view of such problems, and an object of the present invention is to provide a method for manufacturing a lithium-ion capacitor, which can reduce the deactivation rate of lithium and improve the durability of a product by increasing the uniformity of a film formed on a surface of a negative electrode during doping.

### Solution to Problem

A method for manufacturing a lithium-ion capacitor according to one aspect of the present invention includes a step of performing doping at a first doping current value of 0.05 C or more and 0.2 C or less from a start of the doping; and a step of performing doping at a second doping current value higher than the first doping current value. Advantageous Effects of Invention

According to the present invention, by increasing the uniformity of the film formed on the surface of the negative electrode during doping, the deactivation rate of lithium can be reduced, and the durability of the product can be improved.

### BRIEF DESCRIPTION OF DRAWINGS

[FIG. 1] A cross-sectional view showing a schematic configuration of a lithium-ion capacitor to be doped by a method for manufacturing a lithium-ion capacitor according to one embodiment of the present disclosure.
[FIG. 2] A plan view of a cylindrical cell in a developed state according to an embodiment of the present disclosure.
[FIG. 3] A cross-sectional view of the cylindrical cell of FIG. 2 in a developed state.
[FIG. 4] A side view showing the cylindrical cell of FIG. 2.
[FIG. 5] A flowchart showing a flow of a method for manufacturing a lithium-ion capacitor according to one embodiment of the present disclosure.
[FIG. 6] A view schematically showing a state where a power supply device is connected in order to dope the lithium-ion capacitor of FIG. 1.
[FIG. 7] A graph showing a change in voltage of a lithium-ion capacitor doped by the method for manufacturing a lithium-ion capacitor according to the embodiment of the present disclosure.
[FIG. 8] A graph showing a change in voltage of a lithium-ion capacitor in Comparative Example of the method for manufacturing a lithium-ion capacitor according to the embodiment of the present disclosure.
[FIG. 9] A graph showing a change in a deactivation ratio of lithium in a cycle durability test in Examples of the method for manufacturing a lithium-ion capacitor.
[FIG. 10] An SEM observation image of a negative electrode surface in the Examples of the method for manufacturing a lithium-ion capacitor.
[FIG. 11] An SEM observation image of a negative electrode surface in the Comparative Example of the method for manufacturing a lithium-ion capacitor.
[FIG. 12] A view showing an analysis result by X-ray photoelectron spectroscopy in the Examples of the method for manufacturing a lithium-ion capacitor.
[FIG. 13] A view showing an analysis result by X-ray photoelectron spectroscopy in the Comparative Example of the method for manufacturing a lithium-ion capacitor.

### DESCRIPTION OF EMBODIMENTS

### <Embodiment>

### <<Configuration of lithium-ion capacitor>>

Hereinafter, an embodiment will be described in detail with reference to the drawings.

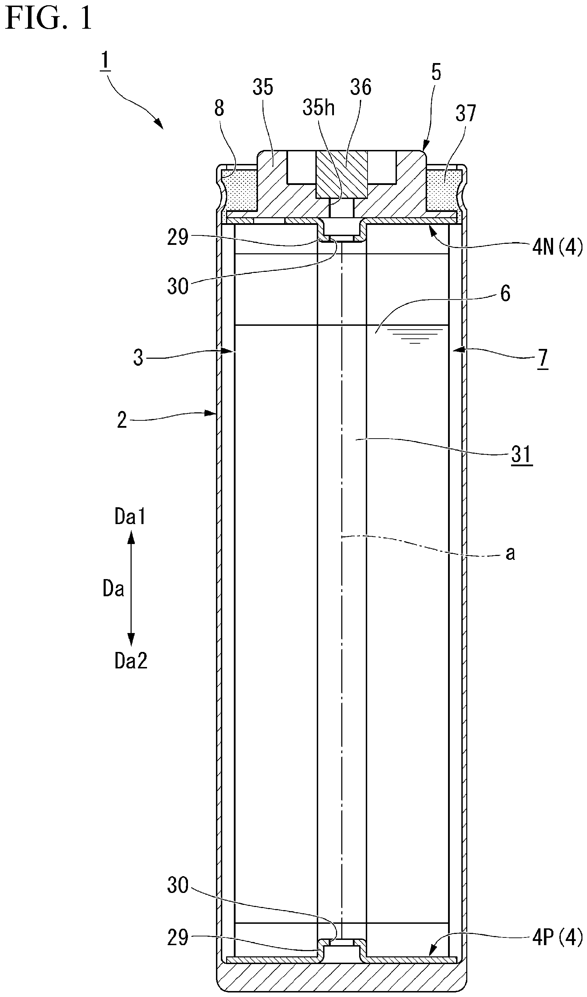

As shown in FIG. 1, a lithium-ion capacitor (LIC) 1 manufactured by the method for manufacturing a lithium-ion capacitor according to the present embodiment has a structure of an electric double layer capacitor on a positive electrode and a lithium-ion battery on a negative electrode.

The lithium-ion capacitor 1 includes a casing 2, a cylindrical cell 3, a collector plate 4, a terminal plate 5, and an electrolytic solution 6.

The casing 2 is made of a metal such as an aluminum alloy and has a bottomed tubular shape. The casing 2 forms an accommodating space 7 that accommodates the cylindrical cell 3, the current collector plate 4, and the electrolytic solution 6. The terminal plate 5 is attached to an opening portion 8 of the casing 2 of the present embodiment by performing a processing such as drawing. The terminal plate 5 closes the opening portion 8.

The cylindrical cell 3 is formed in a cylindrical shape that can be accommodated in the accommodating space 7 of the casing 2. The cylindrical cell 3 formed in a cylindrical shape is accommodated in the accommodating space 7 together with the electrolytic solution 6. A central axis a of the cylindrical cell 3 extends along a central axis of the accommodating space 7 of the casing 2 when accommodated in the accommodating space 7 of the casing 2. In the following description, a direction in which the central axis a (see FIG. 1) of the cylindrical cell 3 extends is referred to as a central axis direction Da, a side where the opening portion 8 of the casing 2 is disposed in the central axis direction Da is referred to as a first side Da1 in the central axis direction, and an opposite side thereof is referred to as a second side Da2 in the central axis direction.

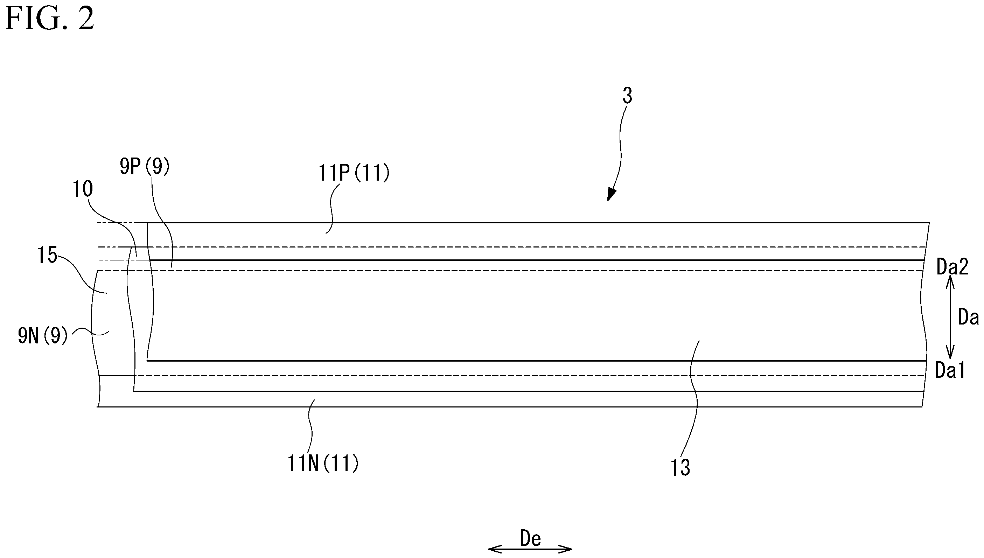

As shown in FIGS. 1 to 4, the cylindrical cell 3 includes a plurality of electrode foils 9, a plurality of separators 10, and a plurality of protruding portions 11. The cylindrical cell 3 is formed by winding the electrode foil 9 and the separator 10 alternately in a cylindrical shape. As shown in FIG. 2, the cylindrical cell 3 includes, as the electrode foil 9, a positive electrode foil 9P containing lithium and a negative electrode foil 9N capable of storing lithium. The cylindrical cell 3 according to the present embodiment includes a positive electrode protruding portion 11P and a negative electrode protruding portion 11N as the protruding portions 11.

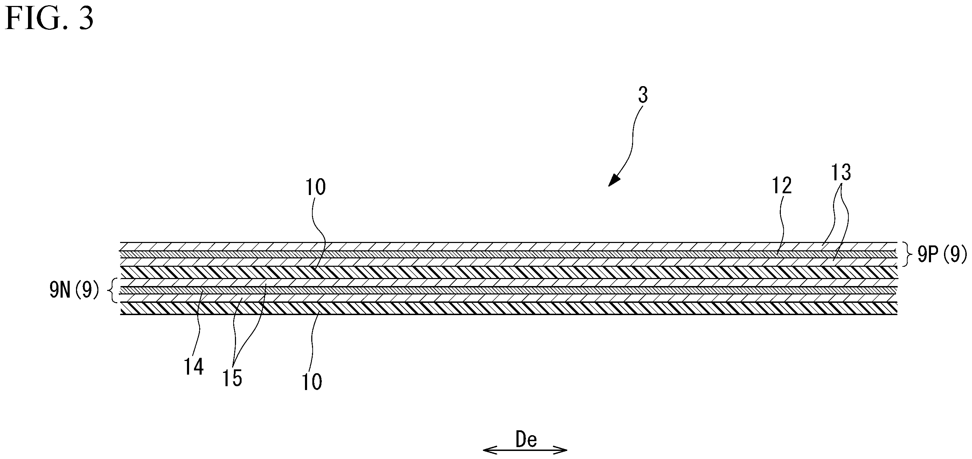

As shown in FIG. 3, the positive electrode foil 9P of the present embodiment includes an aluminum layer 12 formed of an aluminum alloy, and positive electrode carbon material layers 13 formed by coating front and back surfaces of the aluminum layer 12 with a carbon material. The positive electrode carbon material layer 13 of the present embodiment is formed of a material containing lithium carbonate (Li₂CO₃). The negative electrode foil 9N of the present embodiment includes a copper layer 14 consisting of copper which is a metal having a melting point of 1000°C or higher, and a negative electrode carbon material layer 15 formed by applying a carbon material capable of storing lithium ions to each of front and back surfaces of the copper layer 14. The aluminum layer 12 and the copper layer 14 have thicknesses of, for example, 6 to 20 µm.

The separator 10 consists of at least an electrical insulating material that maintains electrical insulating properties between the electrodes of the lithium-ion capacitor 1. The separator 10 is in a sheet form when the cylindrical cell 3 is unrolled. The separator 10 is disposed between the positive electrode foil 9P and the negative electrode foil 9N. The separator 10 is disposed to sandwich the negative electrode foil 9N. As a result, the positive electrode foil 9P (electrode foil 9), the separator 10, the negative electrode foil 9N (electrode foil 9), and the separator 10 are alternately laminated. The separator 10 has a thickness of, for example, 18 to 22 µm.

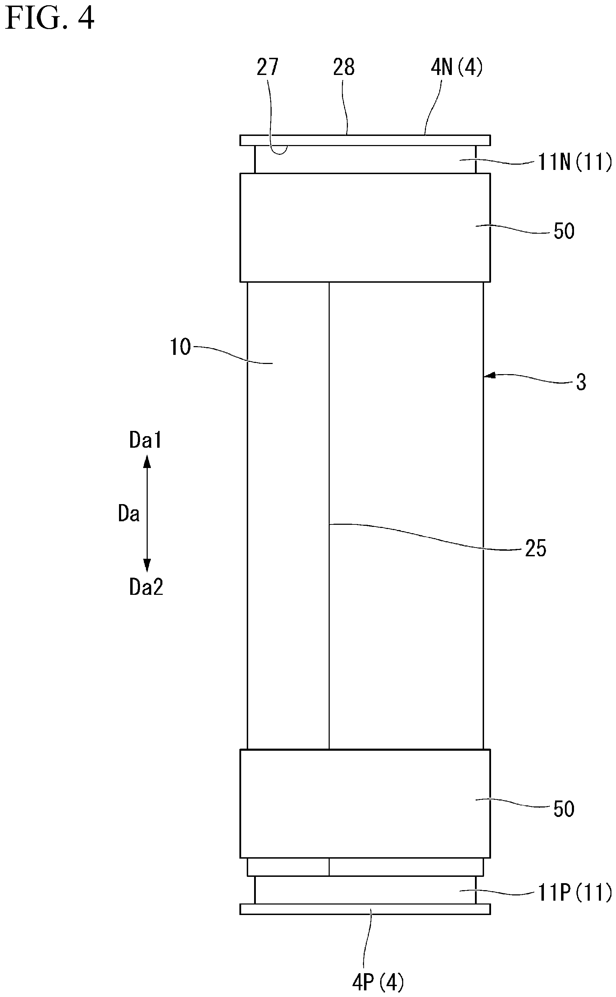

As shown in FIG. 2, the protruding portion 11 is formed integrally with the electrode foil 9. As shown in FIGS. 2 and 4, the cylindrical cell 3 according to the present embodiment includes a negative electrode protruding portion 11N formed on a first side Da1 in the central axis direction and a positive electrode protruding portion 11P formed on a second side Da2 in the central axis direction, as a plurality of protruding portions 11. The positive electrode protruding portion 11P is formed to protrude from the positive electrode foil 9P toward the second side Da2 in the central axis direction. The positive electrode protruding portion 11P protrudes toward the second side Da2 in the central axis direction with respect to the positive electrode foil 9P, the negative electrode foil 9N, and the separator 10. The negative electrode protruding portion 11N is formed to protrude from the negative electrode foil 9N toward the first side Da1 in the central axis direction. The negative electrode protruding portion 11N protrudes toward the first side Da1 in the central axis direction with respect to the positive electrode foil 9P, the negative electrode foil 9N, and the separator 10.

As shown in FIG. 4, the cylindrical cell 3 is formed by winding a positive electrode foil 9P (electrode foil 9), a separator 10, a negative electrode foil 9N (electrode foil 9), and another separator 10, which extend in a band shape, in a laminated state into a cylindrical shape. As a result, the positive electrode foil 9P, the negative electrode foil 9N, and the separator 10 constituting the cylindrical cell 3 form a spiral shape as viewed from the central axis direction Da.

A separator 10 is disposed on the outer peripheral surface of the cylindrical cell 3 formed in this manner. In the present embodiment, an adhesive tape 50 or the like is wound around an edge part of the outer peripheral surface of the cylindrical cell 3 on the first side Da1 in the central axis direction and an edge part of the outer peripheral surface of the cylindrical cell 3 on the second side Da2 in the central axis direction. The end part 25 of the separator 10 is prevented from spreading radially outward with the central axis a as a center by the adhesive tape 50 and the like.

In the cylindrical cell 3, in a state of the cylindrical cell 3 alone, that is, in a state in which the cylindrical cell 3 is not accommodated in the casing 2, a tension is applied to the electrode foil 9 (positive electrode foil 9P and negative electrode foil 9N) and the separator 10 in the direction De (see FIG. 2 and FIG. 3) in which the electrode foil 9 and the separator 10 are extended in a band shape. Due to this tension, in the cylindrical cell 3, a pressure in a predetermined range is applied between the electrode foils 9 facing each other through the separator 10. A pressure in a predetermined range, for example, 0.5 to 0.7 MPa is applied between the positive electrode foil 9P and the negative electrode foil 9N facing each other through the separator 10.

In this way, by applying the tension to the electrode foil 9 and the separator 10, a uniform pressure is applied between the positive electrode foil 9P and the negative electrode foil 9N over the entire winding direction of the cylindrical cell 3 between the positive electrode foil 9P and the negative electrode foil 9N constituting the cylindrical cell 3. As a result, the gap between the positive electrode foil 9P and the negative electrode foil 9N is made uniform over the entire cylindrical cell 3.

Here, in a case where the gap between the positive electrode foil 9P and the negative electrode foil 9N is uneven, a portion where the electrical resistance between the positive electrode foil 9P and the negative electrode foil 9N is locally increased may be generated. In a portion where the electrical resistance is locally large, the overvoltage between the positive electrode foil 9P and the negative electrode foil 9N increases, which is considered to lead to the deposition of lithium (Li) on the negative electrode foil 9N.

On the other hand, by appropriately managing the contact pressure between the positive electrode foil 9P and the negative electrode foil 9N over the entire cylindrical cell 3, the gap between the positive electrode foil 9P and the negative electrode foil 9N is made uniform. As a result, the variation in electrical resistance between the positive electrode foil 9P and the negative electrode foil 9N is suppressed, and the deposition of lithium is suppressed.

In the cylindrical cell 3, in a case where the pressure applied between the electrode foils 9 facing each other through the separator 10 is set to be smaller than, for example, 0.5 MPa, the effect of suppressing the deposition of lithium by attempting to make the gap between the positive electrode foil 9P and the negative electrode foil 9N uniform is reduced. In addition, in the cylindrical cell 3, in a case where the pressure applied between the electrode foils 9 facing each other through the separator 10 is set to be smaller than, for example, 0.5 MPa, the tension applied to the electrode foil 9 and the separator 10 during the manufacturing of the cylindrical cell 3 is reduced, and it is difficult to stably exert the pressure applied between the electrode foils 9. In addition, in the cylindrical cell 3, in a case where the pressure applied between the positive electrode foil 9P and the negative electrode foil 9N facing each other through the separator 10 is set to be larger than, for example, 0.7 MPa, the separator 10 interposed between the positive electrode foil 9P and the negative electrode foil 9N may be plastically deformed and crushed, and the gap between the positive electrode foil 9P and the negative electrode foil 9N may be excessively narrowed. In addition, in the cylindrical cell 3, in order to set the pressure applied between the electrode foils 9 facing each other through the separator 10 to be larger than, for example, 0.7 MPa, the tension applied to the electrode foil 9 and the separator 10 during the manufacturing of the cylindrical cell 3 becomes excessively high, and particularly, the mechanical strength of the separator 10 may be exceeded, and adverse effects such as breakage of the separator 10 may occur.

In a region on the outer peripheral surface of the cylindrical cell 3 where the terminal of the electrode foil 9 or the separator 10 is fixed with the adhesive tape 50, the tension applied to the electrode foil 9 and the separator 10 may be reduced as compared with the inner peripheral portion of the cylindrical cell 3. Therefore, the region to which the pressure in the predetermined range is applied between the positive electrode foil 9P and the negative electrode foil 9N facing each other through the separator 10 as described above is a portion excluding the region facing the outer peripheral surface of the cylindrical cell 3.

In a case of forming the cylindrical cell 3, it is preferable that the appropriate numerical ranges of the tension applied to the electrode foil 9 and the separator 10 and the pressure applied between the electrode foils 9 facing each other through the separator 10 are set, for example, in a stage of trial production of the lithium-ion capacitor 1 before actually manufacturing the lithium-ion capacitor 1 as a product. For example, when forming the cylindrical cell 3 while applying tension to the electrode foil 9 and the separator 10, pressure-sensitive paper, a pressure sensor, or the like is interposed between the electrode foils 9 facing each other through the separator 10, and the pressure value acting between the electrode foils 9 facing each other through the separator 10 is measured. Using a cylindrical cell 3 in which the pressure value acting between the electrode foils 9 is measured, a long-term storage test and a cycle test in which a load is repeatedly applied are carried out under predetermined conditions. The cylindrical cell 3 is then evaluated after the tests to confirm the presence or absence of lithium deposition. As a result, a proper numerical range for the tension applied to the electrode foil 9 and the separator 10, as well as the pressure applied between the electrode foils 9 facing each other through the separator 10, may be set based on the condition that the deposition of lithium cannot be confirmed.

In the present embodiment, as shown in FIGS. 1 and 4, the collector plate 4 includes a positive electrode collector plate 4P and a negative electrode collector plate 4N. The negative electrode collector plate 4N is fixed to the negative electrode protruding portion 11N by welding or the like. The positive electrode collector plate 4P is fixed to the positive electrode protruding portion 11P by welding or the like. The positive electrode collector plate 4P and the negative electrode collector plate 4N are formed in a substantially flat plate shape having a circular outer edge about the central axis a, and have an inner surface 27 facing the protruding portion 11 side in the central axis direction Da and an outer surface 28 facing a side opposite to the inner surface 27 to be adjacent to each other in the central axis direction Da.

The positive electrode collector plate 4P is formed of a metal containing the same metal as the positive electrode protruding portion 11P. That is, the positive electrode collector plate 4P of the present embodiment is formed of an aluminum alloy. The negative electrode collector plate 4N is formed of a metal containing the same metal as the negative electrode protruding portion 11N. The negative electrode collector plate 4N is formed of a material having a melting point of 1000°C or higher. The negative electrode collector plate 4N of the present embodiment is made of copper. As shown in FIG. 1, a projection portion 29 that protrudes toward the protruding portion 11 side in the central axis direction Da is formed in a central portion of the collector plate 4 in the present embodiment. Furthermore, a through hole 30 is formed in the projection portion 29 of the collector plate 4. The projection portion 29 is inserted into a cavity portion 31 with a circular cross-section, formed at the central portion of the cylindrical cell 3 and extending in the central axis direction Da.

As shown in FIG. 1, the terminal plate 5 closes the opening portion 8 of the casing 2. The terminal plate 5 of the present embodiment includes at least a terminal plate body 35, a pressure regulating valve 36, and a sealing rubber 37. The terminal plate body 35 has a circular shape when viewed from the central axis direction Da, and has a hole 35h in a central portion thereof. The pressure regulating valve 36 is disposed in the central portion of the terminal plate body 35 and regulates a pressure in the accommodating space 7 through the hole 35h. The sealing rubber 37 seals a gap between the terminal plate body 35 and an inner peripheral surface of the opening portion 8 of the casing 2. The pressure regulating valve 36 is attached to close the hole 35h after the electrolytic solution 6 is injected into the accommodating space 7 through the hole 35h of the terminal plate body 35.

### <<Method for manufacturing lithium-ion capacitor>>

A method for manufacturing the lithium-ion capacitor will be described.

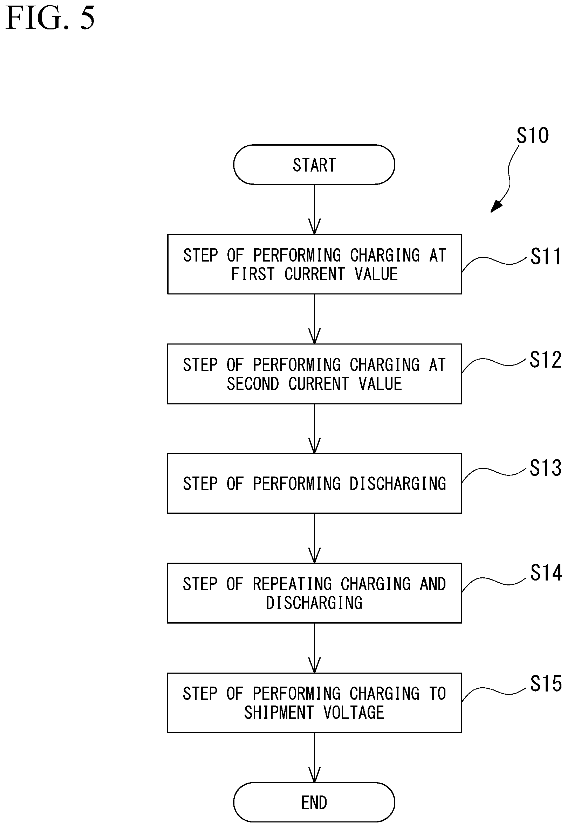

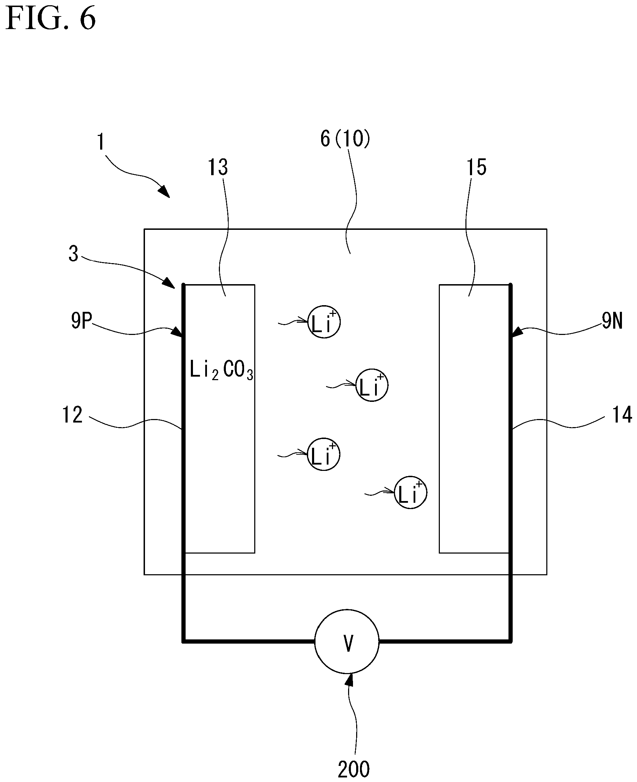

As shown in FIG. 5, the method S10 for manufacturing a lithium-ion capacitor includes a step S11 of performing doping at a first doping current value, a step S12 of performing doping at a second doping current value, a step S13 of performing discharging, a step S14 of repeating charging and discharging, and a step S15 of performing charging to a shipment voltage. The method S10 for manufacturing a lithium-ion capacitor is executed in a case of performing doping after the manufacturing of the lithium-ion capacitor 1. In the method S10 for manufacturing a lithium-ion capacitor, as shown in FIG. 6, a voltage is applied between the aluminum layer 12 of the positive electrode foil 9P and the copper layer 14 of the negative electrode foil 9N by connecting the power supply device 200 to the terminal plate 5. Then, lithium ions (Li⁺) are generated by electrochemically decomposing lithium carbonate (Li₂CO₃) contained (carried) in the positive electrode carbon material layer 13, and the generated lithium ions are supplied to the negative electrode carbon material layer 15. As a result, the negative electrode carbon material layer 15 reversibly stores and carries lithium ions, and is subjected to so-called lithium-ion doping.

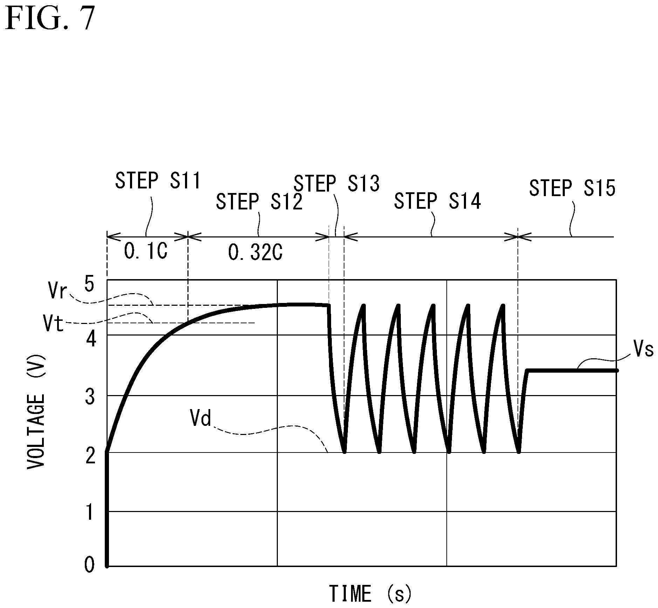

As shown in FIG. 7, in the step S11 of performing doping at the first doping current value, the power supply device 200 causes a current to flow between the positive electrode foil 9P and the negative electrode foil 9N at the first doping current value from the start of doping. In the step S11, the first doping current value is set, for example, in a range in which the C rate of the doping current is 0.05 C or more and 0.2 C or less. Here, the C rate generally represents a rate of charging and discharging. Here, the magnitude of the current for fully charging (or discharging) the capacity of the negative electrode (in the case of the present embodiment, the negative electrode of the lithium-ion capacitor 1) to be tested in 1 hour is defined as 1 C. In a case where the first doping current value is set to be higher than 0.2 C, the effect of uniformizing the SEI thin film due to suppressing the doping current to be low immediately after the start of the doping is reduced. In addition, in a case where the first doping current value is set to be smaller than 0.05 C, the time required for doping is increased, which leads to a decrease in production efficiency.

In the present embodiment, 1 C of the lithium-ion capacitor 1 is, for example, 5 amperes (A). In this case, in the step S11, doping is performed at a first doping current value set in a range of 0.05 C or more and 0.2 C or less, that is, 0.25 A or more and 1.0 A. In the present embodiment, in the step S11, doping is performed at a first doping current value set to 0.1 C = 0.5 A. In addition, in the step S11 of performing doping at the first doping current value, constant current (CC) charging is performed at a constant current.

In the step S11 of performing doping at the first doping current value, doping at the first doping current value is continued until a voltage (hereinafter, simply referred to as an inter-electrode voltage) between the positive electrode and the negative electrode reaches a preset target voltage Vt. Here, the target voltage is set to be lower than the rated voltage of the lithium-ion capacitor. In a case where the dope is started in the step S11, a solid electrolyte interphase (SEI) film is formed on the surface (the interface with the electrolytic solution 6) of the negative electrode carbon material layer 15 by the decomposition of the film-forming components such as the additives and the solvents contained in the electrolytic solution 6. In the step S11, for example, the inter-electrode voltage at which the SEI film is formed on the entire surface of the negative electrode carbon material layer 15 is set as the target voltage Vt. In the present embodiment, a voltage at which the SEI film is formed on the entire surface of the negative electrode carbon material layer 15 in advance by an experiment or the like is set as the target voltage Vt. Examples of the target voltage Vt can include 4.2 V.

In the power supply device 200, the inter-electrode voltage in the lithium-ion capacitor 1 to be doped is monitored, and in a case where the inter-electrode voltage reaches the target voltage Vt, the process proceeds to the step S12, and the doping is switched to the doping at the second doping current value.

In the step S12 of performing doping at the second doping current value, doping is performed at the second doping current value by the power supply device 200. In the step S12, the second doping current value is set in a range higher than the C rate of the first doping current value in the step S11 and lower than 1 C. In the present embodiment, in the step S12, for example, doping is performed at a second doping current value set in a range of 0.25 C or more and less than 1 C. In the present embodiment, in the step S12, doping is performed at a second doping current value set to 0.32 C = 1.6 A. In addition, in the step S12 of performing doping at the second doping current value, so-called constant current constant voltage (CCCV) charging of charging at a constant voltage after constant current is performed.

In the step S12 of performing doping at the second doping current value, the doping is continued at the second doping current value until the inter-electrode voltage reaches the rated voltage of the lithium-ion capacitor 1 or the second target voltage Vr set to be equal to or lower than the rated voltage. In the present embodiment, the second target voltage Vr is set to, for example, 4.5 V. In the step S12, after the SEI film is formed on the entire surface of the negative electrode carbon material layer 15 in the step S11, doping can be efficiently performed at a second doping current value higher than the doping current value in the step S11. As a result, the doping operation of the lithium-ion capacitor 1 is completed. In a case where the inter-electrode voltage reaches the second target voltage Vr, constant voltage charging of holding the second target voltage Vr for a predetermined time is performed, and then the process proceeds to the step S13.

In the step S13 of discharging, the lithium-ion capacitor 1 is discharged. In the step S13, the discharging is performed until the inter-electrode voltage of the lithium-ion capacitor 1 reaches a preset lower limit target voltage Vd from the second target voltage Vr (for example, 4.5 V). In the present embodiment, the power supply device 200 performs the discharging until the inter-electrode voltage is set to, for example, 2.0 V at a current value (0.32 C = 1.6 A) of the same C rate as that in the step S12, which is the lower limit target voltage Vd. In a case where the inter-electrode voltage reaches the lower limit target voltage Vd, the process proceeds to the step S14.

In the step S14 of repeating charging and discharging, the power supply device 200 repeats the charging and discharging of the lithium-ion capacitor 1 a predetermined number of times. In this manner, the SEI film formed on the negative electrode carbon material layer 15 is fixed. In the present embodiment, in the step S14, charging and discharging are repeated at a current value (1.0 C = 5 A) in which the C rate is set to, for example, 1.0 C between the second target voltage Vr (for example, 4.5 V) and the lower limit target voltage Vd (for example, 2.0 V). After repeating the charging and discharging a predetermined number of times, the process proceeds to the step S15. During the repetition of the charging and the discharging in the step S14, the second target voltage Vr and the lower limit target voltage Vd may be changed, or a time during which neither the charging nor the discharging is performed may be provided.

In the step S15 of charging up to the shipment voltage, charging is performed at a current value (1.0 C = 5 A) in which the C rate is set to, for example, 1.0 C until the preset shipment voltage Vs (for example, 3.8 V) is reached. In a case where the voltage value reaches the shipment voltage Vs, the charging is stopped, and the connection of the power supply device 200 is released.

It is noted that the step S13 of performing discharging, the step S14 of repeating charging and discharging, and the step S15 of performing charging to the shipment voltage can also be omitted.

### <Operating effects>

In the method S10 for manufacturing the lithium-ion capacitor 1, the doping was performed at a first doping current value in which the C rate was set to 0.05 C or more and 0.2 C or less from the start of the doping, and then the doping was performed at a second doping current value having a C rate higher than the first doping current value. As described above, at an initial stage immediately after the start of the doping, the potential of the surface of the negative electrode carbon material layer 15 is made uniform by suppressing the doping current to a low level, and the formation rate of the SEI film on the surface of the negative electrode carbon material layer 15 is made uniform. As a result, the film thickness of the SEI film formed on the surface of the negative electrode carbon material layer 15 is made uniform, and the generation of a portion having a locally high electrical resistance is suppressed. As a result, in a case of charging and discharging the lithium-ion capacitor 1 in actual use, the lithium-ion storage property in the negative electrode carbon material layer 15 is improved, and the amount of lithium ions that are deposited without being stored in the negative electrode carbon material layer 15 is suppressed. As a result, the deactivation rate of lithium can be reduced, and the durability of the lithium-ion capacitor 1 can be improved.

Further, in the step S11 of performing doping at the first doping current value, doping is performed until the inter-electrode voltage reaches the target voltage Vt set to be lower than the rated voltage Vr. By setting the target voltage Vt such that the SEI film is formed on the entire surface of the negative electrode carbon material layer 15, a uniform SEI film can be stably formed.

Further, in the step S11 of performing doping at the first doping current value, doping is performed with a constant current, and in the step S12 of performing doping at the second doping current value, doping is performed at a constant voltage after the constant current. As a result, in the step S11, the SEI film can be stably formed, and in the step S12, the doping of the lithium-ion capacitor 1 can be efficiently performed.

In addition, in the lithium-ion capacitor 1, by applying a tension to the electrode foil 9 and the separator 10 of the cylindrical cell 3, a uniform pressure is applied between the positive electrode foil 9P and the negative electrode foil 9N over the entire winding direction of the cylindrical cell 3 between the positive electrode foil 9P and the negative electrode foil 9N constituting the cylindrical cell 3. As a result, the gap between the positive electrode foil 9P and the negative electrode foil 9N is made uniform over the entire cylindrical cell 3. Therefore, the contact pressure between the positive electrode foil 9P and the negative electrode foil 9N is properly managed, and the variation in electrical resistance between the positive electrode foil 9P and the negative electrode foil 9N is suppressed. As a result, the deposition of lithium on the electrode foil 9 (negative electrode foil 9N) is suppressed. In a case where the doping is carried out on the lithium-ion capacitor 1 using the above-described method S10 for manufacturing the lithium-ion capacitor 1, the effect of reducing the deactivation rate of lithium and improving the durability of the lithium-ion capacitor 1 is further enhanced.

### [Examples]

The lithium-ion capacitor 1 was subjected to doping by the method S10 for manufacturing the lithium-ion capacitor 1 as described above, and the evaluation was performed, and thus the results are shown below.

The cylindrical cell 3 was produced such that a pressure of 0.5 MPa was applied between the positive electrode foil 9P and the negative electrode foil 9N. The lithium-ion capacitor 1 was manufactured using the cylindrical cell 3.

### (Example 1)

The manufactured lithium-ion capacitor 1 was subjected to doping by the method S10 for manufacturing the lithium-ion capacitor 1 as described above. In the step S11 immediately after the start of the doping, the doping was carried out at a constant current until the inter-electrode voltage reached the target voltage Vt = 4.2 V at a doping current of 0.1 C = 0.5 A. After the inter-electrode voltage reached 4.2 V, the process proceeded to the step S12, and the doping was carried out at a constant voltage and a constant current until the inter-electrode voltage reached the second target voltage Vr = 4.5 Vat a doping current of 0.32 C = 1.6 A. Then, in the step S13, the discharge was performed at a current value of 0.32 C = 1.6 A until the inter-electrode voltage reached 2.0 V. Further, in the step S14, charging and discharging were performed for 5 cycles at an inter-electrode voltage of 2.0 V and 4.5 V at a current value of 0.32 C = 1.6 A. In the step S15, charging was performed at a current value of 0.32 C = 1.6 A until the inter-electrode voltage reached the shipment voltage Vs = 3.8 V.

### (Comparative Example)

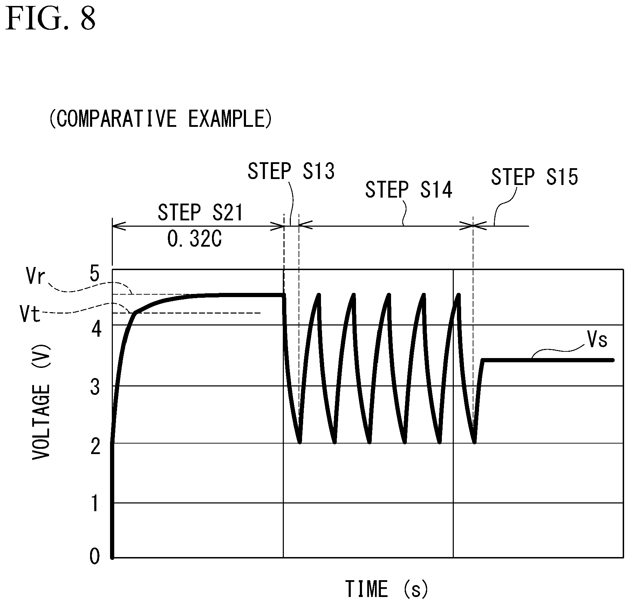

For comparison, as shown in FIG. 8, in the step S21 immediately after the start of the doping of the manufactured lithium-ion capacitor 1, doping was carried out at a constant voltage and a constant current until the inter-electrode voltage reached the rated voltage Vr = 4.5 V at a doping current of 0.32 C = 1.6 A. Then, doping was performed under the same conditions as in the steps S13, S14, and S15 of Example 1.

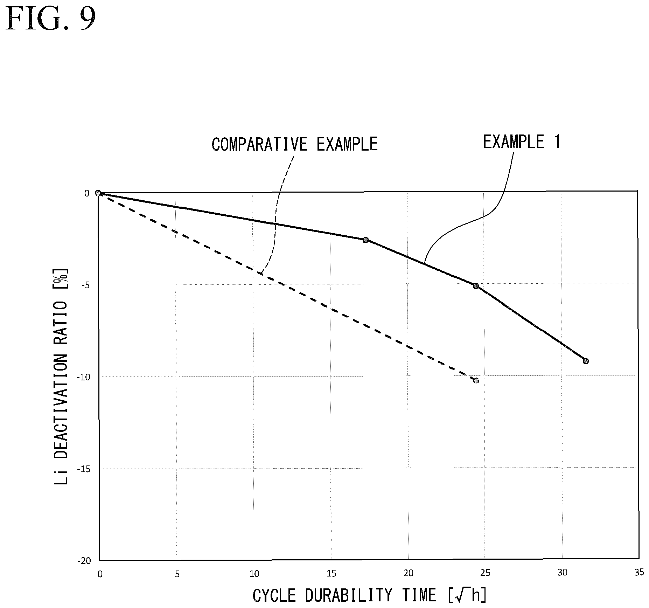

For each of Example 1 and Comparative Example, a cycle durability test was performed in which a step of discharging the lithium-ion capacitor 1 after charging until the inter-electrode voltage reached 2.8 V and a step of charging the lithium-ion capacitor 1 after charging until the inter-electrode voltage reached 3.95 V were repeated for 600 to 1000 hours, and the deactivation ratio of lithium was measured. The results are shown in FIG. 9.

As shown in FIG. 9, it was confirmed that in Example 1 in which doping was carried out by the method S10 for manufacturing the lithium-ion capacitor 1, the deactivation ratio of lithium was suppressed to be lower than that in the comparative example.

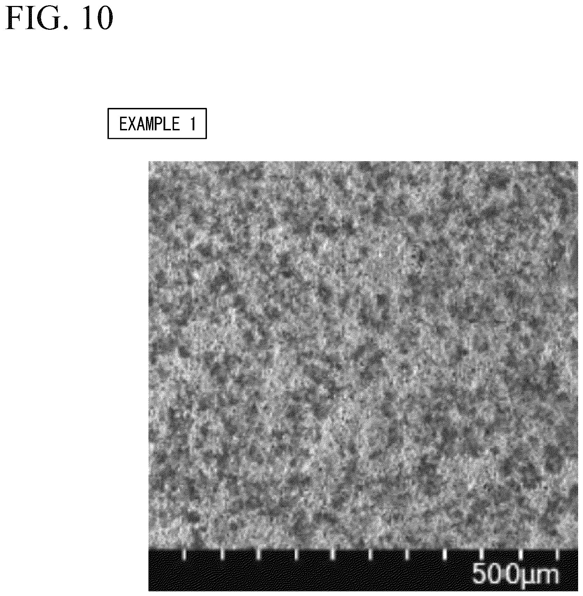

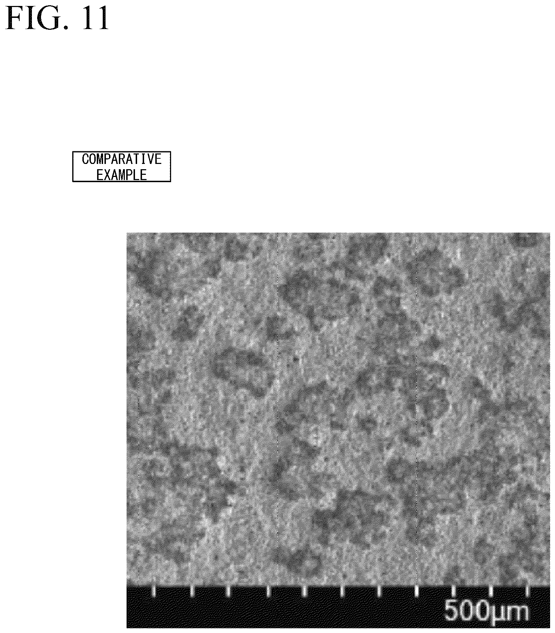

In addition, for each of Example 1 and Comparative Example, the surface state of the negative electrode carbon material layer 15 of the negative electrode foil 9N, which was disassembled at a cell voltage of 4.0 V after the initial input and output measurement, was observed with a scanning electron microscope (SEM). The results are shown in FIGS. 10 and 11.

As shown in FIG. 11, it was confirmed that the negative electrode surface of Comparative Example had coarse recess portions and projection portions distributed, whereas the negative electrode surface of Example 1, which was subjected to doping by the method S10 for manufacturing the lithium-ion capacitor 1, had fine recess portions and projection portions distributed as shown in FIG. 10. Here, since the projection portion is a deposit derived from the metal Li, the generation of coarse deposits in the initial stage was suppressed in Example 1, which led to the improvement of the service life.

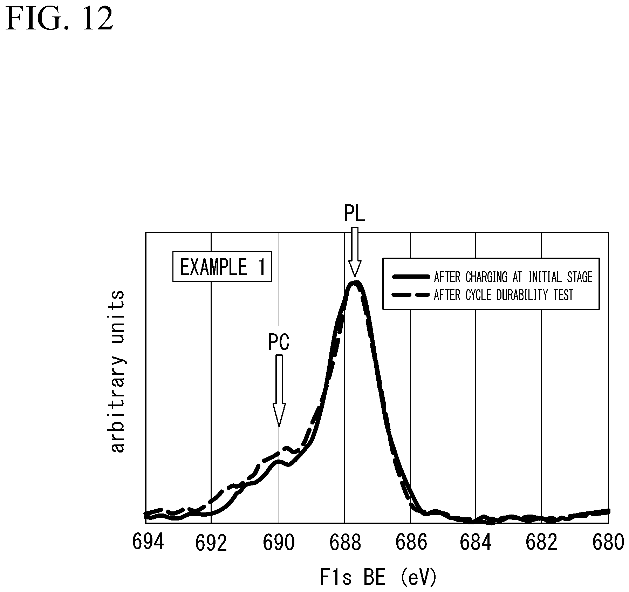

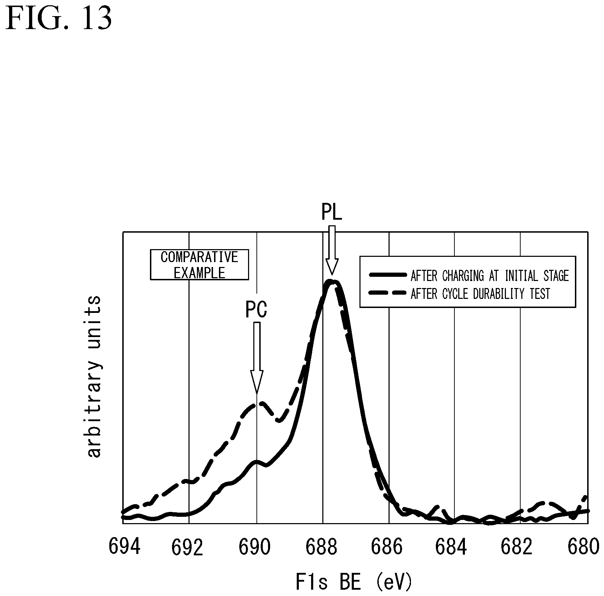

In addition, for each of Example 1 and Comparative Example, the bonding state with fluorine (F) was analyzed by surface analysis using X-ray photoelectron spectroscopy (XPS) for each of the negative electrode carbon material layer 15 immediately after the doping and the negative electrode carbon material layer 15 after the cycle durability test. The results are shown in FIGS. 12 and 13.

As shown in FIGS. 12 and 13, in both Example 1 and Comparative Example, a peak PL indicating a bond between lithium (Li) and fluorine (F) was observed in the vicinity of 688 eV. In addition, in the comparative example shown in FIG. 13, a peak PC representing a bond between carbon (C) and fluorine (F) was observed in the vicinity of 690 eV. In this comparative example, it was found that the peak PC indicating the bond between carbon (C) and fluorine (F) was clearly increased after the cycle durability test as compared with immediately after the doping. In the process of depositing lithium, a compound consisting of carbon (C) and fluorine (F) is generated. That is, the fact that the peak PC representing the bond between carbon (C) and fluorine (F) is high indicates that lithium is deposited.

On the other hand, in Example 1, it was confirmed that, immediately after the doping, a peak PC indicating a bond between carbon (C) and fluorine (F) was not recognized, and after the cycle durability test, a peak PC indicating a bond between carbon (C) and fluorine (F) was slightly recognized, but was clearly lower than that of the comparative example. Therefore, it was confirmed that the deposition of lithium was suppressed by performing doping by the method S10 for manufacturing the lithium-ion capacitor 1.

### <Other embodiments>

Hereinabove, the embodiment of the present invention has been described. However, the present invention is not limited thereto and can be suitably modified without departing from the technical idea of the invention.

In the above-described embodiment, the configuration of the lithium-ion capacitor 1 has been described, but the lithium-ion capacitor 1 may have other configurations as appropriate.

### INDUSTRIAL APPLICABILITY

According to the present invention, by increasing the uniformity of the film formed on the surface of the negative electrode during doping, the deactivation rate of lithium can be reduced, and the durability of the product can be improved.

### REFERENCE SIGNS LIST

1 Lithium-ion capacitor
2 Casing
3 Cylindrical cell
9 Electrode foil
10 Separator

## Claims

1. A method for manufacturing a lithium-ion capacitor, comprising:
a step of performing doping at a first doping current value of 0.05 C or more and 0.2 C or less; and
a step of performing doping at a second doping current value higher than the first doping current value.

2. The method for manufacturing a lithium-ion capacitor according to Claim 1,
wherein in the step of performing doping at the first doping current value, doping is performed until an inter-electrode voltage reaches a target voltage set to be lower than a rated voltage.

3. The method for manufacturing a lithium-ion capacitor according to Claim 2,
wherein in a case where the inter-electrode voltage has reached the target voltage, the step of performing doping at the first doping current value is switched to the step of performing doping at the second doping current value.

4. The method for manufacturing a lithium-ion capacitor according to Claim 1 or 3,
wherein in the step of performing doping at the second doping current value, doping is continued at the second doping current value until the inter-electrode voltage reaches the rated voltage or a second target voltage set to be equal to or lower than the rated voltage.

5. The method for manufacturing a lithium-ion capacitor according to Claim 1 or 2,
wherein in the step of performing doping at the first doping current value, doping is performed at a constant current.

6. The method for manufacturing a lithium-ion capacitor according to Claim 5,
wherein in the step of performing doping at the second doping current value, doping is performed at a constant voltage after a constant current.

7. The method for manufacturing a lithium-ion capacitor according to Claim 1,
wherein the second doping current value is 0.25 C or more and less than 1 C.

8. The method for manufacturing a lithium-ion capacitor according to Claim 1 or 2,
wherein the lithium-ion capacitor includes
a cylindrical cell that is wound in a cylindrical shape in a state in which an electrode foil and a separator, each extending in a strip shape, and laminated, and
a cylindrical casing that accommodates the cylindrical cell, and
the cylindrical cell is in which a pressure of 0.5 MPa or more is applied between the electrode foils facing each other through the separator by applying a tension to the electrode foil and the separator in a direction in which the electrode foil and the separator extend.

9. The method for manufacturing a lithium-ion capacitor according to Claim 8,
wherein a pressure applied between the electrode foils facing each other via the separator is 0.7 MPa or less.
